# EUROPÄISCHE PATENTSCHRIFT

(11) **EP 0 358 952 B1**
(45) Veröffentlichungstag und Bekanntmachung des Hinweises auf die Patenterteilung: **03.08.1994**
(21) Anmeldenummer: 89114822.3
(22) Anmeldetag: 10.08.1989
(51) Int. Cl.: B01D 35/16, E03F 5/14

(54) **Siebrechen, insbesondere Regenwassersieb**
Sieve grid, especially a sieve for rain water
Grillage de tamis, notamment tamis pour l'eau pluviale

(30) Priorität: 05.09.1988 CH 3310/88
(43) Veröffentlichungstag der Anmeldung: 21.03.1990
(73) Patentinhaber: ROMAG RÖHREN UND MASCHINEN AG, CH-3186 Düdingen (CH)
(72) Erfinder: Gresa, Louis, CH-8340 Hinwil (CH)
(74) Vertreter: KUHNEN, WACKER & PARTNER

(56) Entgegenhaltungen:
- DE-A- 2 248 861
- DE-A- 3 042 443
- US-A- 1 698 387
- US-A- 3 615 012

## Beschreibung

Die Erfindung bezieht sich auf einen Siebrechen mit Reinigungsvorrichtung für eine Abwasseranlage, bei welchem die Reinigungsvorrichtung in Fliessrichtung hinter dem mit in parallelen Abständen zueinander angeordneten Rechenstäben versehenen Siebrechen angeordnet ist und einen zwischen einer Einlaufseite und einer Austragsseite schienengebunden hin- und herbewegbaren Reinigungswagen mit daran angeordnetem Reinigungskamm umfasst, welcher mit im Abstand zueinander, zwischen den einzelnen Rechenstäben angeordneten und beim Reinigen jeweils über die Profiloberkante ragenden Zähnen versehen ist.

In Abwasseranlagen, vor allem solchen, die der Ableitung von kommunalen und industriellen Abwässern dienen, werden in den Abwässerkanälen Siebrechen eingebaut, die vor allem zur Zurückhaltung von sperrigen Schwimmstoffen dienen. Die Abwässerkanäle werden für bestimmte Abwassermengen dimensioniert, die etwa das Doppelte oder mehr der Trockenwetter-Abwassermenge betragen kann. Bei grossem Abwasseranfall, insbesondere bei starken Niederschlägen, kann der Abwasserkanal die anfallende Abwassermenge nicht mehr ableiten. Um Überflutungen zu vermeiden, werden in den Kanälen sogenannte Überfälle vorgesehen, durch welche die durch den Abwasserkanal nicht ableitbaren Wassermengen abgeleitet und in ein Absetzbecken und anschliessend in einen Vorfluter der Abwasseranlage fliessen. Diese Zusatz-Wassermengen können sperrige Schwimmstoffe enthalten, beispielsweise Papier, Kunststoffe, Lumpen, Holzteile oder dergleichen, deren Eintritt in den Vorfluter verhindert werden soll. Auch wenn Absetzbecken verwendet werden, reichen diese in solchen Fällen nicht aus, um eine zuverlässige Reinigung der Zusatz-Wassermengen zu gewährleisten. Es ist bekannt, in solche Überlaufkanäle einen als Feinrechen ausgebildeten Siebrechen einzubauen, wie dies in ähnlicher Weise auch für die Einlaufkanäle in den eigentlichen Klärbecken der Kläranlage der Fall ist. Für Siebrechen in Kläranlagen wurden bisher nicht so hohe Anforderungen bezüglich des Ausscheidungsgrades der Schwimmstoffe verlangt wie bei einem Regenwassersieb, da hier nicht eine Kläranlage, sondern im besten Fall ein möglichst klein dimensioniertes Absetzbecken vorhanden ist. Zur Entlastung der Kläranlage werden jedoch neuerdings auch Feinrechen eingebaut.

Aus der DE-A 3 042 443 ist eine Vorrichtung zur Reinigung eines in einen Kanal eingebauten und mit im Abstand zueinander angeordneten Stäben versehenen Abwasserrechens bekannt, welche Vorrichtung im wesentlichen einen mit Rollen in seitlichen Führungsschienen des Kanals geführten und mit einer Reinigerharke versehenen Harkenwagen umfasst, welcher mit den Zinken der Reinigerharke zwischen den Stäben des Abwasserrechens angeordnet und zur Reinigung desselben mittels entsprechender Hubmittel auf- und abwärts bewegbar ist.

Aus der DE-A 2 248 861 ist eine weitere Vorrichtung zum Reinigen eines Siebrechens bekannt, welche einen zwischen zwei Seitenwänden eines Kanals angeordneten Siebrechen mit im Abstand zueinander angeordneten Rechenstäben sowie eine in Richtung der Wasserströmung hinter dem Siebrechen angeordnete Reinigungsvorrichtung umfasst, welche mit im Abstand zueinander angeordneten und um entsprechende Kettenräder geführten Förderketten versehen ist, an welchen in Förderrichtung im Abstand zueinander angeordnete Putzeinheiten befestigt sind, die jeweils mit einer Anzahl beim umlaufenden Transport zwischen die Rechenstäbe des Siebrechens greifende Putzzinken versehen sind.

Der Erfindung liegt die Aufgabe zugrunde, einen Siebrechen mit Reinigungsvorrichtung der eingangs genannten Art dahingehend zu verbessern und so auszugestalten, dass eine hohe Reinigungsleistung mit verhältnismässig geringem Aufwand unter Verwendung einfacher Mittel erreicht wird und zudem relativ grosse Wassermengen gereinigt werden können.

Diese Aufgabe wird erfindungsgemäss dadurch gelöst, dass die Zähne dreieckförmig ausgebildet und je eine zur Einlaufseite hin orientierte flache Flanke sowie je eine zur gegenüberliegenden Austragsseite hin orientierte steile Flanke aufweisen, und dass am einlaufseitigen Ende der einzelnen Rechenstäbe je ein die Zähne von Feststoffen reinigendes Abstreifblatt angeordnet ist.

Weitere Merkmale der Erfindung ergeben sich aus der folgenden Beschreibung in Verbindung mit der Zeichnung und den einzelnen Patentansprüchen.

Die Erfindung wird nachstehend unter Bezugnahme auf die Zeichnung näher beschrieben. Es zeigt:
- Fig.1: eine in Schnittansicht dargestellte Abwasseranlage mit eingebautem Siebrechen und daran angeordneter Reinigungsvorrichtung,
- Fig. 2: einen Vertikalschnitt eines Reinigungswagens, bestehend aus zwei Fahrgestellen und einem dazwischenliegenden Reinigungskamm mit einem Kammsteg und am Kammsteg befestigten, zwischen die Rechenstäbe ragenden blattähnlichen Zähnen im Umkehrpunkt an der Austragsseite,
- Fig. 3: den Reinigungswagen nach Fig. 2 im Umkehrpunkt auf der der Austragsseite gegenüberliegenden Seite,
- Fig. 4: einen Vertikalschnitt eines zweiten Regenwassersiebes, bei welchem die Zähne des Reinigungskamms beweglich sind,
- Fig. 5: einen Vertikalschnitt eines dritten Regenwassersiebes, welches gegen die Strömungsrichtung geneigt ist und nach unten ragende Zähne aufweist, und
- Fig. 6: einen vertikalen Längsschnitt eines vierten Regenwassersiebes, welches vor dem Abflusskanal eines Absetzbeckens angeordnet ist und von unten angeströmt wird.

Die Erfindung geht von der Ueberlegung aus, dass eine Beschleunigung der Reinigungsgeschwindigkeit erreicht werden kann, wenn die Zahl und die-Grösse der bewegten Teile erheblich verringert und trotzdem eine gleichwertige Reinigungswirkung erreicht werden kann, so dass selbst bei grossem Schwimmstoffanteil das Verstopfen des Rechens zuverlässig vermieden wird.

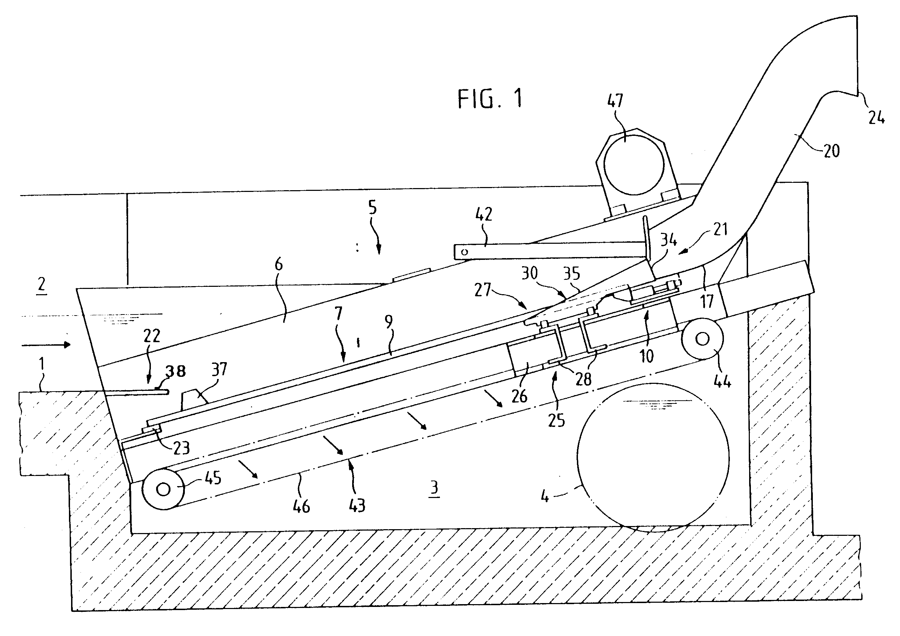

Die angeführten Beispiele gemäss Fig. 1 und 4 - 6 betreffen Regenwassersiebe. Es ist jedoch auch möglich, diese Siebe in Abwasserkanälen unverändert einzusetzen, um auch in diesen Anwendungsfällen von den Vorteilen derselben Gebrauch zu machen.

In Fig. 1 ist mit 1 die Sohle eines Zulaufkanals 2 bezeichnet, der beispielsweise an einen Sicherheitsüberlauf eines Abwasserkanals anschliesst. Der Kanal mündet in einen Schacht 3, von wo eine Leitung 4 abgeht.

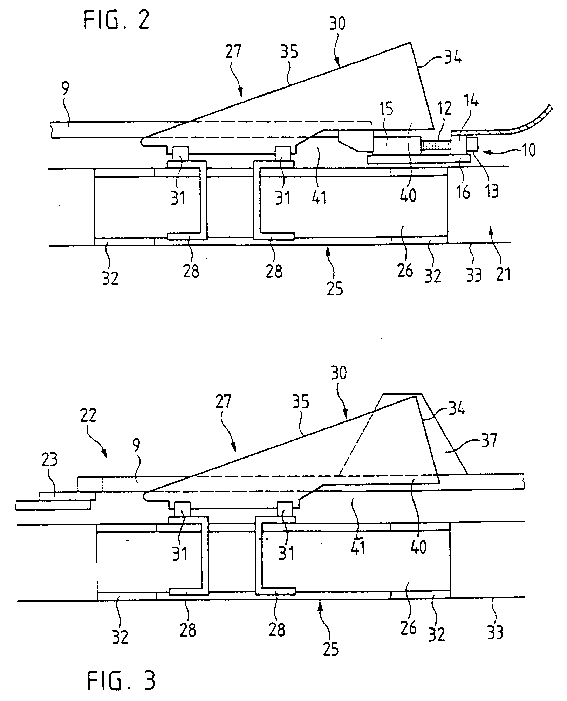

Im Anschluss an den Zulaufkanal 2 ist ein Siebrechen 5 mit in Fliessrichtung geringer ansteigender Neigung angeordnet, der sich im wesentlichen über dem Schacht 3 erstreckt. Der Siebrechen 5 weist Seitenwände 6 auf, welche die Breite des Siebrechens 5 begrenzen. Zwischen den beiden Seitenwänden 6 ist ein Siebboden 7 angeordnet, der aus parallel nebeneinanderliegenden Rechenstäben 9 zusammengesetzt ist, wobei jeweils zwischen zwei Rechenstäben 9 ein Spalt freigelassen ist, der je nach Anlage 3 - 10 mm betragen kann. Im Hinblick auf die Verminderung des freien Querschnittes bei Wahl eines kleinen Spaltes - bei einer Spaltbreite von 3 mm und einer Rechenstabdicke von 10 mm ist die freie Durchflussfläche noch etwa 23% der gesamten Fläche - ist es wünschenswert, die Breite der Rechenstäbe 9 möglichst schmal auszubilden. Hierzu kann ein hochkant aufgestelltes Flachband verwendet werden, jedoch ist auch dann mit einer verhältnismässig grossen Durchbiegung zu rechnen, da man für den Regenwasseranfall mit verhältnismässig hohen Geschwindigkeiten rechnen muss, z.B. bis 3 m pro Sekunde und mehr. Eine Verbesserung der Formsteifigkeit der Rechenstäbe 9 wird dadurch erreicht, dass sie vorgespannt werden. In Fig. 1 ist hierzu eine Spannvorrichtung 10 vorgesehen, die sich aus einem am Ende der Rechenstäbe 9 befestigten Gewindebolzen 12 und einer Spannmutter 13 zusammensetzt. Die Spannmutter 13 stützt sich hierbei an einem Spannsteg 14 ab, siehe Fig. 2, in welchem Bohrungen zum Durchstecken des Gewindebolzens 12 vorgesehen sind. Es ist jedoch auch möglich, die Enden der Rechenstäbe 9 an einer Spannschiene 15 zu befestigen und den Gewindebolzen 12 an der Spannschiene anzuordnen, beispielsweise durch Einschrauben. Der Spannsteg 14 und die Spannschiene 15 fassen eine Anzahl Rechenstäbe 9 zusammen, jedoch können die Spannstäbe 9 auch gruppenweise zusammengefasst sein, so dass über die Breite des Siebbodens 7 mehrere Gruppen von Spannstäben 9 angeordnet sein können. Bei schmalen Sieben können dagegen alle Spannstäbe 9 zu einer einzigen Gruppe zusammengefasst sein. Der Spannsteg 14 ist mit einer Traverse 16 verbunden, auf welcher sich die Spannschiene 15 verschieben kann, wenn mit der Spannmutter 13 der Rechenstab 9 gespannt wird. Der Spannsteg 14 ist an der Wand 17 eines Austragsschachtes 20 befestigt, der seinerseits in dem von den Seitenwänden gebildeten Rahmen abgestützt ist.

Während die Spannvorrichtung 10 sich auf der Austragsseite 21 des Siebrechens 5 befindet, sind die Rechenstäbe 9 auf der Einlaufseite 22 fest auf einer Einlauftraverse 23 abgestützt, siehe Fig. 1 und 3.

Zwischen den Seitenwänden 6 ist ein Reinigungswagen 25 gelagert, der sich aus zwei Fahrgestellen 26 und einem dazwischenliegenden Reinigungskamm 27 zusammensetzt. Der Reinigungskamm 27 seinerseits besteht aus einem aus zwei U-Profilen 28 gebildeten Kammsteg, welcher mit seinen Enden an den Fahrgestellen 26 abgestützt ist, und aus blattähnlichen Zähnen 30, welche auf der Oberseite der beiden U-Profile 28 mittels Befestigungsstegen 31 unverrückbar abgestützt sind. Die Fahrgestelle 26 weisen Gleitschuhe 32 aus Kunststoff auf, siehe Fig. 2 und 3, mittels welcher die Fahrgestelle 26 auf einer an den Seitenwänden 6 vorgesehenen Schiene 33 verfahren werden können.

Die Zähne 30, zwischen denen unterhalb der Rechenstäbe 9 auf der Ablaufseite Kunststoffplatten angeordnet sind, weisen Dreieckform auf, wobei die gegen die Austragsseite 21 gerichtete Seite als steile Flanke 34, z. B. mit 60° und grösser zum Siebboden 7, ausgebildet ist, während auf der gegen die Einlaufseite 22 gerichteten Seite der Zähne 30 eine flache Flanke 35, z.B. mit 45° und Kleiner zum Siebboden 7, vorgesehen ist.

Aus Fig. 1 und 3 ist ersichtlich, dass auf den Rechenstäben 9 in der Nähe der Einlaufseite 22, z.B. am Ende eines die Sohle 1 verlängernden Leitbleches 38, ein Abstreifblatt 37 befestigt ist. Das Abstreifblatt 37 weist zweckmässig dieselbe Breite wie der Rechenstab 9 auf und hat die Aufgabe, die an die Umkehrstelle der Einlaufseite 22 ankommenden Zähne 30, d.h. deren flache Flanke 35, von Feststoffen zu reinigen, die dann bei der Bewegung gegen die Austragsseite von der steilen Flanke 34 der Zähne 30 mitgenommen werden.

Aus Fig. 2 und 3 ist ersichtlich, dass die Zähne 30 eine gegen die Austragsseite 21 gerichtete Verlängerung 40 aufweisen, die einen Freiraum 41 bildet. Wie aus Fig. 2 ersichtlich ist, ermöglicht der Freiraum 41, dass die Verlängerung 40 sich über die Spannvorrichtung 10 bis gegen den Anfang des Austragsschachtes 20 erstrecken kann. Dadurch wird erreicht, dass die von den Rechenstäben 9 gelösten Feststoffe in den Austragsschacht 20 transportiert werden können. Die mit dem nächsten Hub des Reinigungswagens 25 angelieferten Feststoffe verschieben die früher abgelagerten Feststoffe weiter in den Austragsschacht 20. Bis zur Ueberfallkante 24 werden die Feststoffe durch das dauernde Nachschieben von Feststoffen gepresst und schlussendlich über die Ueberfallkante 24 ausgetragen. Reichen die Zähne 30 mit ihren steilen Flanken 34 nicht aus, um die Feststoffe in den Austragsschacht 20 hinaufzubefördern, kann noch ein Stössel 42 vorgesehen werden, der bei der Ankunft des Reinigungswagens 25 die Schubbewegung der Zähne 30 unterstützt. Der Stössel 42 kann als pneumatisches oder hydraulisches Hubelement mit einem Schild ausgebildet sein.

Für die Hin- und Herbewegung des Reinigungswagens 25 zwischen der Austragsseite 21 und der Einlaufseite 22 ist ein Hülltrieb 43 mit Umlenkrädern 44, 45 und einem Hüllglied 46, z.B. einer Kette oder einem Zahnriemen, vorgesehen, dessen Antriebsrad 44 durch einen Motor 47 angetrieben wird, welcher auf der Oberseite der Seitenwände 6 angeordnet ist. Die Leistungsübertragung vom Motor 47 auf das Antriebsrad 44 kann durch einen weiteren Hülltrieb oder ein Zahnradgetriebe (nicht dargestellt) erfolgen. Der Motor 47 führt eine Reversierbewegung aus, die der Hin- und Herbewegung des Reinigungswagens 25 entspricht; wobei dieser mit dem Hüllglied 46 verbunden ist und von diesem mitgenommen wird.

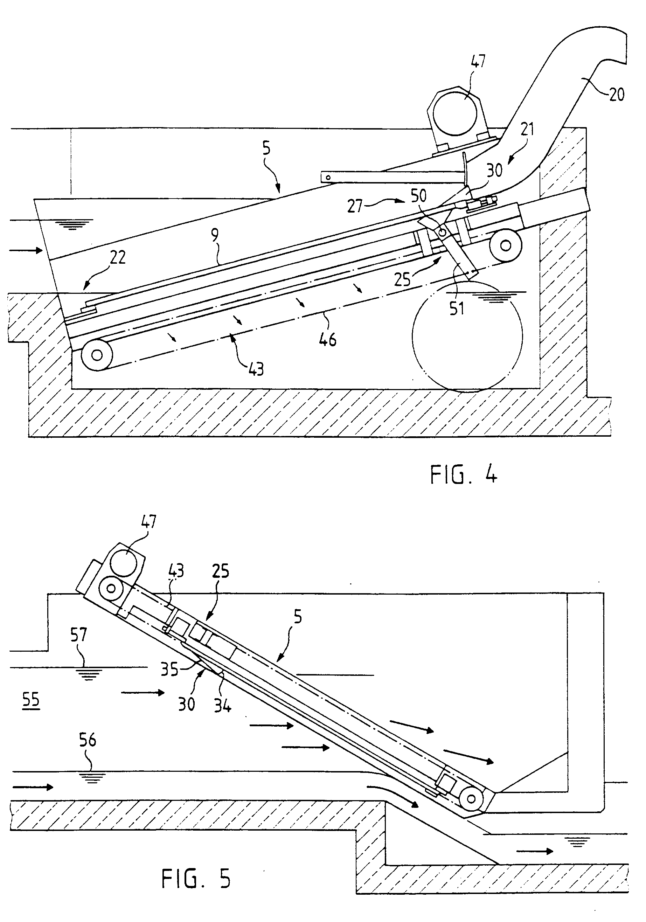

In Fig. 4 ist ein dem Siebrechen nach Fig. 1 ähnlicher Siebrechen 5 dargestellt. Der einzige Unterschied besteht darin, dass die Zähne 30 des Reinigungskammes 27 um eine Drehachse 50 schwenkbar sind. Die Zähne 30 sind hierbei jeweils als zweiarmige Hebel ausgebildet von denen der eine auf der einen Seite der Drehachse 50 angeordnete Hebel den Zahn 30 bildet, während der auf der anderen Seite der Drehachse 50 nach abwärts gerichtete Hebel 51 jeweils mit dem Hüllglied 46 verbunden ist. Bei der Bewegung des Reinigungswagens 25 gegen die Einlaufseite 22 werden die Zähne 30 abwärts geschwenkt, so dass sie nicht über das Profil der Rechenstäbe 9 ragen. Bei der Bewegung gegen die Austragsseite 21 werden die Zähne 30 über die Rechenstäbe 9 geschwenkt, so dass sie die an den Rechenstäben 9 abgesetzten Feststoffe mitnehmen und in den Austragsschacht 20 transportieren können.

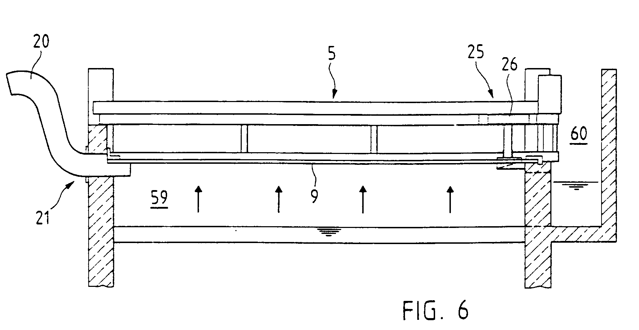

Fig. 5 und 6 zeigen zwei Anwendungsmöglichkeiten der beschriebenen Siebrechen. In Fig. 5 ist der Siebrechen 5 derart in einen Zulaufkanal 55 zu einer Kläranlage eingesetzt, dass bei Normal-Abwassermenge das gesamte Abwasser in die Kläranlage läuft, wobei dann der Siebrechen 5 nicht in Betrieb ist. Erhöht sich jedoch die Abwassermenge, fliesst das über der Normal-Abwassermenge 56 zufliessende Abwasser 57 durch den Siebrechen 5 und wird nach dem Siebrechen 5 seitlich abgeleitet, z.B. in ein Absetzbecken oder in den Vorfluter. In diesem Fall werden die vom Reinigungswagen 25 gesammelten Feststoffe nach abwärts transportiert, wo sie von dem in die Kläranlage fliessenden Abwasser mitgenommen werden. Die steile Flanke 34 der Zähne 30 ist hierbei nach abwärts und die flache Flanke 35 aufwärts gerichtet.

In Fig. 6 ist der Siebrechen 5 vor dem Abflusskanal eines Absetzbeckens angeordnet und tritt bei Erhöhung der Normal-Abwassermenge in Funktion. Hierbei fliesst das Abwasser von unten in Pfeilrichtung nach oben und durchquert die Rechenstäbe 9. Hinter den Rechenstäben 9 wird das Abwasser in einen parallel zum Siebrechen liegenden Kanal 59 abgeleitet und gelangt von dort in einen Querkanal 60. Bei der Ausführung nach Fig. 6 sind die Fahrgestelle 26 des Reinigungswagens 25 mit Abstand über den Rechenstäben 9 angeordnet, so dass der Hülltrieb über dem Abwasserniveau angeordnet werden kann. Auf der Austragsseite 21 werden die Feststoffe in den Austragsschacht 20 gefördert und ausgetragen.

Die beiden Siebrechen nach Fig. 1 und 4 weisen den Vorteil auf, dass wegen des einzigen Reinigungswagens 25 die bewegten Massen verhältnismässig klein sind und die Zähne 30 immer zwischen den Siebstäben 9 bleiben, so dass ein Reversierbetrieb mit verhältnismässig grossen Räumgeschwindigkeiten möglich ist. Hierbei ist die Ausführung des Siebrechens 5 nach Fig. 1 besonders einfach, weil die Zähne 30 fest auf dem Kammsteg 28 angeordnet sind, wodurch sich die bewegten Massen weiter verringern. Es hat sich jedoch überraschend gezeigt, dass der Betrieb mit den festen Zähnen 30 ebenso wirkungsvoll ist wie der Betrieb mit schwenkbaren Zähnen 30. Bei der Bewegung in Richtung zu der Einlaufseite 22 hebt die flache Flanke 35 der Zähne 30 die Feststoffe an, wobei sie dann durch die Strömung gegen die Austragsseite geschwemmt werden. Das ebenfalls fest auf den Rechenstäben 9 aufgesetzte Abstreifblatt 37 streift allenfalls an der flachen Flanke 35 hängengebliebene Feststoffe ab, die bei der Bewegung gegen die Austragsseite 21 hin von der steilen Flanke 34 mitgenommen werden.

Die Anordnung des Siebrechens 5 mit einer Steigung oder mit Steigung Null hat den Vorteil, dass ein Teil der angeschwemmten Feststoffe bereits gegen die Auftragsseite 21 bewegt wird. Aber auch dann, wenn der Abwasserstrom diese Bewegung nicht unterstützen kann, wie z.B. bei der Ausführung nach Fig. 6, arbeitet der Siebrechen 5 einwandfrei und weist eine grosse Reinigungsleistung auf, so dass mit relativ hohen Abwassergeschwindigkeiten gearbeitet werden kann.

Bei der Ausführung nach Fig. 6 ist es auch möglich, auf den Austragsschacht 20 zu verzichten, wobei das Material bei der Austragsseite 21 zusammengeballt und abgesetzt wird.

Es ist auch möglich, den Siebrechen 5 vertikal anzuordnen, z.B. bei einem Ueberlauf zu einem Entlastungskanal.

Bei Siebrechen sehr grosser Länge ist es zweckmässig, zwei oder mehr Reinigungsvorrichtungen einzusetzen, von denen jede eine Teillänge des Siebbodens reinigt. Dementsprechend sind die Reinigungsvorrichtungen um diese Teillänge von einander entfernt miteinander verbunden und werden gleichzeitig bewegt.

## Patentansprüche

1. Siebrechen mit Reinigungsvorrichtung für eine Abwasseranlage, bei welchem die Reinigungsvorrichtung in Fliessrichtung hinter dem mit in parallelen Abständen zueinander angeordneten Rechenstäben (9) versehenen Siebrechen (5) angeordnet ist und einen zwischen einer Einlaufseite (22) und einer Austragsseite (21) schienengebunden hin- und herbewegbaren Reinigungswagen (25) mit daran angeordnetem Reinigungskamm (27) umfasst, welcher mit im Abstand zueinander, zwischen den einzelnen Rechenstäben (9) angeordneten und beim Reinigen jeweils über die Profiloberkante der Rechenstäbe (9) ragenden Zähnen (30) versehen ist, dadurch gekennzeichnet, dass die Zähne (30) dreieckförmig ausgebildet und je eine zur Einlaufseite (22) hin orientierte flache Flanke (35) sowie je eine zur gegenüberliegenden Austragsseite (21) hin orientierte steile Flanke (34) aufweisen, und dass am einlaufseitigen Ende der einzelnen Rechenstäbe (9) je ein die Zähne (30) von Feststoffen reinigendes Abstreifblatt (37) angeordnet ist.

2. Siebrechen mit Reinigungsvorrichtung nach Anspruch 1, dadurch gekennzeichnet, dass die einlaufseitige flache Flanke (35) der Zähne (30) jeweils einen auf den durch die Rechenstäbe (9) gebildeten Siebboden (7) bezogenen Winkel von 30° und kleiner aufweist und die auslaufseitige steile Flanke (34) jeweils einen auf den Siebboden (7) bezogenen Winkel von 65° und grösser aufweist.

3. Siebrechen mit Reinigungsvorrichtung nach Anspruch 1, dadurch gekennzeichnet, dass die Abstreifblätter (37) derart im Abstand zum einlaufseitigen Ende der Rechenstäbe (9) angeordnet sind, dass bei der einlaufseitigen, richtungsbezogenen Umkehrung des Reinigungswagens (25) von den Abstreifblättern (37) eine Reinigung der Zähne (30) über ihre gesamte Länge erreichbar ist.

4. Siebrechen mit Reinigungsvorrichtung nach Anspruch 1, dadurch gekennzeichnet, dass an der Austragsseite (21) ein Austragsschacht (20) angeordnet ist, derart, dass bei der richtungsbezogenen Umkehrung des Reinigungswagens (25) die je mit einem Verlängerungsstück (40) versehenen Zähne (30) in den Austragsschacht (40) hineinragen.

5. Siebrechen mit Reinigungsvorrichtung nach Anspruch 1, dadurch gekennzeichnet, dass die Zähne (30) schwenkbar an dem Reinigungswagen (27) gelagert sind, derart, dass bei der in Richtung zur Einlaufseite (22) orientierten Bewegung die Zähne (30) mit den Rechenstäben (9) bündig oder unterhalb der Profiloberkante und bei der in Richtung zur Austragsseite (21) orientierten Bewegung jeweils über der Profiloberkante der Rechenstäbe (9) angeordnet sind.

6. Siebrechen mit Reinigungsvorrichtung nach Anspruch 4, dadurch gekennzeichnet, dass die Zähne (30) jeweils als ein um eine Drehachse (50) schwenkbarer, zweiarmiger Hebel ausgebildet sind, und dass jeweils der eine Hebelarm als dreieckförmiger Zahn ausgebildet und der andere Hebelarm mit einem als Kette oder Zahnriemen ausgebildeten Hüllglied (46) eines motorisch angetriebenen Hülltriebes (43) wirkverbunden ist.

7. Siebrechen mit Reinigungsvorrichtung nach Anspruch 1, dadurch gekennzeichnet, dass die an der Einlaufseite (22) an einer Traverse (23) angeordneten und befestigten Rechenstäbe (9) des Siebrechens (5) durch eine austragsseitig angeordnete Spannvorrichtung (10) einzeln oder gruppenweise vorspannbar sind.

## Claims

1. Screen having a cleaning apparatus for a sewage plant, in the case of which screen the cleaning apparatus is arranged behind, seen in the direction of flow, the screen (5), provided with screen bars (9) arranged spaced apart from, and parallel to, one another, and comprises a cleaning carriage (25) which can move back and forth on rails between an inflow side (22) and a discharge side (21), has a cleaning comb (27) arranged on it and is provided with spaced-apart teeth (30) which are arranged between the individual screen bars (9) and, when cleaning, each project above the upper profile edge of the screen bars (9), characterized in that the teeth (30) are of triangular configuration and exhibit in each case one flat flank (35), oriented towards the inflow side (22), and in each case one steep flank (34) oriented towards the opposite discharge side (21), and in that in each case one stripper plate (37) which cleans solids from the teeth (30) is arranged at the inflow end of the individual screen bars (9).

2. Screen having a cleaning apparatus according to Claim 1, characterized in that the inflow-side flat flank (35) of the teeth (30) has in each case an angle of 30° and smaller with respect to the screen base (7) formed by the screen bars (9), and the outflow-side steep flank (34) has in each case an angle of 65° and greater with respect to the screen base (7).

3. Screen having a cleaning apparatus according to Claim 1, characterized in that the stripper plates (37) are arranged at a distance from the inflow end of the screen bars (9) such that, in the event of a reversal in direction of the cleaning carriage (25) on the inflow side, the teeth (30) can be cleaned over their entire length by the stripper plates (37).

4. Screen having a cleaning apparatus according to Claim 1, characterized in that a discharge shaft (20) is arranged on the discharge side (21) such that, in the event of a reversal in direction of the cleaning carriage (25), the teeth (30), each provided with a lengthening piece (40), project into the discharge shaft (40) [sic].

5. Screen having a cleaning apparatus according to Claim 1, characterized in that the teeth (30) are mounted pivotably on the cleaning carriage (27) [sic] such that, in the event of movement oriented in the direction of the inflow side (22), the teeth (30) are arranged flush with the screen bars (9) or beneath the upper profile edge, and, in the event of movement oriented in the direction of the discharge side (21), said teeth are arranged in each case above the upper profile edge of the screen bars (9).

6. Screen having a cleaning apparatus according to Claim 4, characterized in that the teeth (30) are configured in each case as a two-armed lever which can pivot about a rotary spindle (50), and in that in each case one lever arm is configured as a triangular tooth and the other lever arm is in operative connection with an enveloping member (46) which is configured as a chain or toothed belt and belongs to a motor-driven enveloping drive (43).

7. Screen having a cleaning apparatus according to Claim 1, characterized in that the screen bars (9) of the screen (5), which are arranged and fastened on a crossmember (23) on the inflow side (22), can be pretensioned individually or in groups by a tensioning apparatus (10) which is arranged on the discharge side.

## Revendications

1. Grille de crible équipée d'un dispositif de nettoyage pour une installation d'assainissement, dans laquelle le dispositif de nettoyage est disposé en aval, dans le sens de l'écoulement, de la grille de crible (5) munie de barreaux de grille (9) disposés parallèlement à un certain écartement, et comprend un chariot de nettoyage (25), placé entre le côté d'entrée (22) et le côté de sortie (21), monté sur rails, mobile en va-et-vient, sur lequel est prévu un peigne de nettoyage (27) qui est muni de dents (30) disposées à un certain écartement mutuel, disposées entre les barreaux (9) de la grille, et qui font saillie chacune au-delà du bord supérieur du profil pendant le nettoyage, caractérisée en ce que les dents (30) sont de forme triangulaire et présentent chacune un flanc en pente douce orienté vers le côté d'entrée (22) et un flanc (34) en pente raide orienté vers le côté de sortie opposé (21), et en ce que, à l'extrémité côté entrée de chacun des barrreaux (9) de la grille, est disposée une lame racleuse (37) qui débarrasse les dents (30) des matières solides.

2. Grille de crible équipée d'un dispositif de nettoyage selon la revendication 1, caractérisée en ce que le flanc (35) en pente douce côté entrée des dents (30) forme un angle de 30° ou moins avec le fond (7) du crible qui est formé par les barreaux (9) de la grille, et le flanc (34) à pente raide, côté sortie, forme un angle de 65° ou plus avec le fond (7) du crible.

3. Grille de crible avec dispositif de nettoyage selon la revendication 1, caractérisée en ce que les lames racleuses (37) sont disposées à distance de l'extrémité côté entrée des barreaux (9) de la grille de manière qu'au moment de l'inversion du sens de déplacement du chariot de nettoyage (25) sur le côté d'entrée, on peut obtenir avec les lames racleuses (37) un nettoyage des dents (30) sur toute leur longueur.

4. Grille de crible avec dispositif de nettoyage selon la revendication 1, caractérisée en ce que, sur le côté de sortie (21), il est agencé un puits de sortie (20) de telle manière que, au moment de l'inversion du sens de déplacement du chariot de nettoyage (25), les dents (30) s'engagent chacune dans le puits de sortie (40) par un prolongement (40).

5. Grille de crible avec dispositif de nettoyage selon la revendication 1, caractérisée en ce que les dents (30) sont montées pivotantes sur le chariot de nettoyage (27) de telle manière que, lors de leur mouvement orienté vers le côté d'entrée (22), les dents (30) soient disposées à l'affleurement des barreaux (9) de la grille ou au-dessous du bord supérieur du profil et que, dans leur mouvement orienté en direction du côté de sortie (21), ces dents soient disposées chacune au-dessus du bord supérieur du profil des barreaux (9) de la grille.

6. Grille de crible avec dispositif de nettoyage selon la revendication 4, caractérisée en ce que les dents (30) sont constituées chacune par un levier à deux bras, pouvant pivoter autour d'un axe de rotation (50) et en ce que l'un des bras de levier forme une dent triangulaire et l'autre bras de levier est relié fonctionnellement à un élément sans fin (46), constitué par une chaîne ou une courroie crantée, et qui fait partie d'un mécanisme sans fin (43) entraîné par un moteur.

7. Grille de crible avec dispositif de nettoyage selon la revendication 1, caractérisée en ce que les barreaux (9) de la grille de crible (5) qui sont agencés et fixés à une traverse (23) sur le côté d'entrée (22) peuvent être soumis à une précontrainte de tension, individuellement ou de façon groupée, par un dispositif de tension (10) disposé sur le côté de sortie.
